# EUROPEAN PATENT APPLICATION

(11) **EP 1 736 506 A1**
(43) Date of publication of application: **27.12.2006**
(21) Application number: 05013696.9
(22) Date of filing: 24.06.2005
(51) Int. Cl.: C08K 5/00, D01F 6/06, D01F 6/46, C08J 5/18

(54) **Stabilised polypropylene composition**

(71) Applicant: Borealis Technology Oy, 06101 Porvoo (FI)
(72) Inventor: Ackermans, Nina, 3980, Tessenderlo (BE); Fiebig, Joachim, 4502, St. Marien (AT); Boelars, Guido, 3900, Overpelt (BE); Broeders, Bert, 3550, Heusden (BE); Van Paridon, Henk, 3271, Averbode (BE)
(74) Representative: Kador & Partner

(57) **Abstract**

The invention relates to a stabilised polypropylene composition, having excellent processing stability as well as long term stability, which comprises a lactone antioxidant, an antioxidant having a melting point ≥ 200 °C and a hindered amine light stabiliser.

## Description

The invention relates to a stabilised polypropylene composition, having excellent processing stability as well as long term stability.
The stabilised polypropylene composition of the invention is especially intended for the production of fibres, in particular for the production of metlblown fibres.

Olefin polymers, especially polypropylene, are commonly produced into fibres, film or sheet by extruding molten polymer through die orifices such as a spinneret, film or sheet dies, quenching the molten filament, film or sheet, orienting the filament, fibre or sheet, and heat setting the oriented filament, film or sheet prior to winding upon a bobbin. Woven and non-woven fabrics are commonly made from such filament, film or sheet.

A problem is the generation of visible "smoke" during melt extrusion of polyolefin during fibre spinning and film extrusion operations. The "smoke" evolves at or after the die, and is believed to comprise volatile organic compounds in the 20-50 carbon atom range. These evolved volatile organic compounds subsequently condense on colder surfaces in the neighbourhood of the die, e.g. on air knifes, forming obstructions to the air flow and polluting air channels. These condensates require periodic shutdown for cleaning. and coat equipment with resultant problems of nonuniformity of nonwoven fabrics formed from such fibres or of films due to die deposits caused by the volatile organic compounds.

A further problem associated with the production of meltblown fibres is the generation of "shots" and defects, i.e. small droplets being formed and when reaching the underlying spunbond layer they bum holes in the web .
These defects are disturbing the homogeneity of the final fabric and limit the barrier properties that can be reached.

A still further problem is the formation of die deposits. An unsuffiicient stabilisation of the polymer can cause degradation in the die and deposition of degraded polymer in the die holes. If holes are blocked, web properties (especially barrier property) start to deteriorate.

With nonwoven fabric, one of the most essential properties is the so called "hydro head", which ― for a given fabric ― is the height of a water column, which the fabric can support without any liquid passing through the fabric. This barrier property is especially important for hygiene applications, e.g. diapers, sanitary napkins, medical gowns.

### Object of Invention

It is the object of this invention to provide a polypropylene composition, which ― when it is processed into nonwoven fabric ― has a high hydrohead value. It is also an object of the invention to provide a polypropylene composition which can be processed into fibre, film and sheet, without causing excessive die deposits.

The above object was achieved by a polypropylene composition according to claim 1.

The stabiliser system of the polypropylene composition of the present invention consists of at least three components:
A lactone antioxidant, for giving the long term stability, a further antioxidant for giving the processing stability and the hindered amine light stabiliser for giving the UV stability.

Stabilising systems of this principal kind are known, e.g. Fiberstab L 112, which is commercially available from Ciba Specialty Chemicals. Fiberstab L 112 is a stabilising system which is free of phenolic antioxidants. It is known, that phenolic antioxidants contribute to gas fading (yellowing due to reaction with exhaust gases like NOₓ) in fibres. Fiberstab L 112 therefore provides excellent gas fading properties to fibres. It has however been observed, that die lip deposits do still occur at an unsatisfactory level.

The stabilised propylene compositions of the invention do not only have the same good properties of propylene compositions stabilised with Fiberstab L 112. It has been found, that the occurrence of die deposits is much reduced. In addition to these effects, the nonwoven webs, which are produced from the stabilised polypropylene compositions of the invention show an increased hydrohead value. While the inventors do not wish to be bound by this explanation, it is believed, that due to a better stabilisation and the fact that different types of radical scavengers are combined, each of them reacting with different macroradicals during the degradation of polypropylene, it is possible to produce a more regular nonwoven web with less defects and shots and this results in better barrier properties (i.e. higher hydrohead)

According to a preferred embodiment of the present invention, the antioxidant having a melting point ≥ 200 °C is a phosphite or phosphonite antioxidant. Phosphite or phosphonite antioxidants having this high melting temperature are particulary suited for the present invention.

According to an advantageous embodiment of the present invention, the polypropylene composition has an MFR of from 20 up to 3000 g/10 min.(230°C, 2.16kg).
The above MFR Range is typically preferred for the production of meltblown and spunbond fibres.

Polypropylene of the above MFR range is typ ically prepared by polymerising propylene and optional comonomers to a relatively high molecular weight, which is then treated with peroxide to reduce its molecular weight to a desired average ("visbroken"). Alternatively, polypropylene of the above MFR range can be prepared by using a sufficient amount of chain transfer agent, such as hydrogen, during the polymerisation to achieve the desired melt flow rate.

The process of visbreaking a propylene polymer material is well known to those skilled in the art. Generally, it is performed as follows: propylene polymer in particulate form, e.g.,"as polymerized" flake or pelletised, has sprayed thereon or blended therewith, a prodegradant or free radical generating source, e. g., a peroxide in liquid or powder form or absorbed on and/or in a carrier, e.g., polypropylene/peroxide concentrate. The propylene polymer and peroxide or propylene polymer/peroxide concentrate is then introduced into a means for thermally plasticizing or melt blending and conveying the mixture, e.g., an extruder at elevated temperature. Residence time and temperature are controlled in relation to the particular peroxide selected (i.e., based on the half-life of the peroxide at the process temperature of the extruder) so as to effect the desired degree of polymer chain degradation.

The net result is to narrow the molecular weight distribution of the propylene polymer as well as to reduce the overall molecular weight and thereby increase the MFR relative to the as polymerized propylene polymer. For example, a propylene polymer with a fractional MFR (i.e., less than 1), or a propylene polymer with a MFR of 0.5-10 g/10 min, can be selectively visbroken to a MFR of 15-50, by selection of peroxide type, extruder temperature and extruder residence time. A propylene polymer with MFR of 15 - 100 can be visbroken to a MFR of 300 - 3000 g/10 min, also depending on the above conditions..

The polypropylene composition of the present invention comprises propylene homopolymers and/or copolymers, but also mixtures of propylene homopolymers and/or copolymers with other thermoplastic polymers. These thermoplastic polymers include:
1. Polymers of monoolefins, for example polyethylene, polyisobutylene, polybut-1-ene, polymethylpent-1-ene and polymers of cycloolefins, for example those of cyclopentene or norbornene.
2. Mixtures of the polymers mentioned under 1 for example mixtures of polyethylene with polyisobutylene or with EPDM.
3. Copolymers of monoolefins with other vinyl monomers, for example ethylene/but-1-ene copolymers, ethylene/alkyl acrylate copolymers, ethylene/alkyl methacrylate copolymers, ethylene/vinyl acetate copolymers or ethylene/acrylic acid copolymers and salts thereof (ionomers), especially other polyolefins, e.g. polyethylene.

The propylene copolymers include random copolymers and block copolymers. The comonomers preferably are ethylene and/or C₄-C₈ □-olefins, e.g. 1-butene, isobutylene, 3-methyl-1-butene and 4-methyl-1-pentene.
If mixtures of propylene homo- and/or copolymers are used together with other thermoplastic polymers, it is preferred, that the propylene homo- and/or copolymers comprise more than 50 wt% of the polyprolyene composition.

According to an embodiment of the present invention, the lactone antioxidant is selected from one or more of the group consisting of
5,7-di-tert. butyl-3-(3,4-di-methylphenyl)-3H-benzofuran-2-one,
5,7-di-tert. butyl-3-(2,3-di-methylphenyl)-3H-benzofuran-2-one and
5,7-di-tert. butyl-3-phenyl-3H-benzofuran-2-one.

The above mentioned lactone antioxidants are suitable for ensuring that the polypropylene composition shows especially good processing stability and also long time stability in the finished product.

Of the above mentioned lactone antioxidants, it is especially preferred to use a mixture of 90 % of 5,7-di-tert. butyl-3-(3,4-di-methylphenyl)-3H-benzofuran-2-one and 10 % of 5,7-di-tert. butyl-3-(2,3-di-methylphenyl)-3H-benzofuran-2-one. That mixture is commercially available as Irganox HP 136 from Ciba Specialty Chemicals.

According to a further embodiment of the present invention, the phosphite or phosphonite antioxidant having a melting point ≥ 200 °C is selected from one or more of the group consisting of
Bis(2,6-di-t-butyl-4-methylphenyl) pentaerythrityl-di-phosphite,
Bis(2,4-dicumylphenyl)pentaerythritol diphosphite,
2,2',2"-nitrilo triethyl-tris(3,3',5,5'-tetra-t-butyl-1,1'-biphenyl-2,2'-diyl)phosphite) and
2,2'-Ethylidenebis (4,6-di-t-butylphenyl) fluorophosphonite.

The above mentioned phosphite antioxidants are suitable for ensuring that the polypropylene composition of the invention has sufficient processing stability. Of the above mentioned phosphite antioxidants, it is especially preferred to use Bis(2,4-dicumylphenyl)pentaerythritol diphosphite, which is commercially available as Doverphos S-9228 T from Dover Chemical Corporation.
Generally, phosphite antioxidants having a melting temperature of ≥ 210 °C are preferred.

According to a still further embodiment of the present invention, the hindered amine light stabiliser is selected from one or more of the group consisting of dimethyl succinate polymer with 4-hydroxy-2,2,6,6-tetramethyl-1-piperidine ethanol,
Poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino)),
Bis-(1,2,2,6,6-pentamethyl-4-piperidyl) sebacate and 1,3,5-Triazine-2,4,6-triamine, N,N"'-(1,2-ethane-diylbis(((4,6-bis(butyl(1,2,2,6,6-pentamethyl-4-piperidinyl)amino)-1,3,5-triazine-2-yl) imino)-3,1-propanediyl))-bis-(N',N"-dibutyl-N',N"-bis-(1,2,2,6,6-pentamethyl-4-piperidinyl).

The above mentioned hindered amine light stabiliser are suitable for ensuring that the polypropylene compositions of the inventions have sufficient UV stability. They are also used to replace the phenolic antioxidant and to ensure thelong term heat stability of the polypropylene composition (synergistic effect of hindered amine light stabiliser with phosphite/phosphonite antioxidant)

When the three stabilising components described above are employed in polypropylene compositions which are used for the production of nonwoven fabrics, they additionally have the synergistic effect of much reduced die deposits and of a surprisingly high hydrohead value.

According to an advantageous embodiment, the polypropylene composition of the present invention additionally can contain a further stabilising component consisting of one or more phosphite antioxidants, having a melting point < 200 °C.

It is preferred, that the amount of phosphite antioxidant having a melting point < 200 °C is no more than 50 wt% of the amount of antioxidant having a melting point ≥ 200 °C.

Preferably, the phosphite antioxidant having a melting point < 200 °C is selected from one or more of the group consisting of
Tris (2,4-di-*t*-butylphenyl) phosphate,
Bis (2,4-di-*t*-butylphenyl)-pentaerythrityl-di-phosphite and
Phosphorous acid, cyclic butylethyl propandiol, 2,4,6-tri-t-butylphenyl ester.

According to an embodiment, the polypropylene composition of the present invention contains acid neutralising and/or metal deactivator component. Suitable acid neutralizing compounds or metal deactivator components for use in the present invention include zeolite structures (hydrotalcite, both natural and synthetic), calcium stearate (also present as processing aid) aluminum silicate, calcium carbonate, sodium benzoate and oxides and hydroxides of Group IA and IIA metals. Hydrotalcite, calcium lactate, calcium hydroxide, calcium oxide or mixtures thereof are most preferred.

According to an embodiment, the polypropylene composition of the present invention contains a further stabilising component consisting of a sterically hindered phenolic antioxidant or mixtures of sterically hindered phenolic antioxidants.

When a phenolic antioxidant is used for the present invention, it is preferred, that it is selected from one or more of the group consisting of
1,3,5-Tris(3',5'-di-tert. butyl-4'-hydroxybenzyl)-isocyanurate,
2,6-di-tert. butyl -4-methyl phenol,
Pentaerythrityl-tetrakis(3-(3',5'-di-tert. butyl-4-hydroxyphenyl)-propionate,
Octadecyl 3-(3',5'-di-tert. butyl-4-hydroxyphenyl)propionate,
1,3,5-tri-methyl-2,4,6-tris-(3,5-di-tert. butyl-4-hydroxyphenyl) benzene and
Bis-(3,3-bis-(4-'-hydroxy-3'-tert. butylphenyl)butanic acid)-glycolester.
The use of phenolic antioxidant can improve the long term heat stability, if required for the final usage. It will however cause gas fading to occur.

The polypropylene composition of the present invention may contain other additives as appropriate for the intended use of the composition. Such additives include antistatic agents, flameproofing agents, antiblocking agents, lubricants, pigments, optical brighteners, nucleators and clarifiers.

The antioxidant/stabiliser system components may be incorporated into the polypropylene composition in any conventional manner, such as by dry blending the stabiliser system directly with polymer pellets, by means of tumble mixers and Henschel blenders. Solutions, emulsions or slurries of the stabiliser system can be sprayed onto or admixed with granular polymer. For example, the stabiliser components may also be coated upon granules of the polypropylene composition in a fluidized bed. The stabiliser components can also be blended with molten polymer by means of a Banbury mixer, Brabender mixer, roll mill or screw extruder. The antioxidant/stabiliser system components may also be incorporated into one of the polymer components of the polypropylene composition during polymerisation.

The stabiliser system can also be added to the polypropylene composition in the form of a masterbatch according to conventional techniques.

The stabilised polypropylene composition of the present invention is particularly suitable for manufacture into a fibre or film using conventional techniques and apparatus. More particularly, the stabilized polypropylene composition may be extruded at conventional temperatures (i. e., 180 to 320 °C.) through a die, quenched, partially or fully oriented and heat-set prior to winding upon a bobbin or undergoing further processing into spunbonded or melt blown fibre, and ultimately into fabrics, e.g. woven and non-woven webs.

As used herein the term "non-woven web" means a web having a structure of individual fibres or threads which are interlaid, but not in an identifiable manner as in a knitted web. Nonwoven webs have been formed from many processes such as for example, meltblowing processes, spunbonding processes, and bonded carded web processes.

As used herein the term "spunbonded fibres" refers to small diameter fibres which are formed by extruding molten thermoplastic material as filaments from a plurality of fine, usually circular capillaries of a spinneret with the diameter of the extruded filaments then being rapidly oriented and cooled. Spunbond fibres are generally not tacky when they are deposited onto a collecting surface. Spunbond fibres are generally continuous and have average diameters (from a sample of at least 10) larger than 7 microns, more particularly, between about 10 and 20 microns.

As used herein the term "meltblown fibres" means fibres formed by extruding a molten thermoplastic material through a plurality of fine, usually circular, die capillaries as molten threads or filaments into converging high velocity, usually hot, gas (e.g. air) streams which attenuate the filaments of molten thermoplastic material to reduce their diameter, which may be to microfibre diameter. Thereafter, the meltblown fibres are carried by the high velocity gas stream and are deposited on a collecting surface to form a web of randomly dispersed meltblown fibres. Meltblown fibres are microfibres which may be continuous or discontinuous, are generally smaller than 10 microns in average diameter, and are generally tacky when deposited onto a collecting surface.

### Description of measurement methods

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Comonomer contents

Comonomer contents (ethylene) were measured with Fourier transform infrared spectroscopy (FTIR) calibrated with ¹³C-NMR.

### Hydrohead

Hydrohead is measured according to Edana method "HYDROSTATIC HEAD" 160.0-89

### Yellowness

Yellowness index was determined according to ASTM D 1925-70

### Examples

The following materials were used in the examples:

| | **polymer1** | | **polymer2** | | **polymer3** | |
|---|---|---|---|---|---|---|
| polymer type | h-PP | | h-PP | | h-PP | |
| MFR after visbreaking | 800 | g/10min | 1200 | g/10mir | 1200 | g/10min |
| | | | | | | |
| Ca St | 300 | ppm | 300 | ppm | 300 | ppm |
| HP 136 | - | ppm | - | ppm | 115 | ppm |
| Doverphos S-9228-CT | - | ppm | - | ppm | 300 | ppm |
| Tinuvin 622 | - | ppm | - | ppm | 215 | ppm |
| Irganox 1010 | 1000 | ppm | 1000 | ppm - | | ppm |

Spinning trials have been carried out on a REICOFIL® 3 SMS line. The SMS structure has been produced and evaluated at two line speeds:
250 m/min corresponding with a throughput for the meltblown beam of 35kg/m.hour
400 m/min corresponding with a throughput for the meltblown beam of 80kg/m.hour

At 250 m/min a structure of 7/2/7 g has been produced (7g of spunbonded, 2 g of meltblown and 7 g of spunbonded), at 400 m/min a structure of 7/3/7 g has been produced.
The resin which was used for the spunbonded was a propylene homopolymer having an MFR (2.16 kg, 230 °C) = 27 g/10 min.
For the meltblown layer the above three polymers have been compared: The last material, polymer3, is an embodiment of this invention. Melt temperature, DCD (distance conveyer belt to the die) and air volume and air temperature have been adapted to the materials (see results)

Yellowness index was also determined for some materials after multiple extrusions at 220 °C.

| **polymer** | **Hydrohead** | **spinning speed** | **DCD** | **Yellowness index** | | |
|---|---|---|---|---|---|---|
| | **[mm]** | **[m/min]** | **[mm]** | **pass1** | **pass2** | **pass3** |
| polymer 1 | 151 | 250 | 150 | | | |
| polymer2 | 135 | 250 | 150 | 0,1 | 2,1 | 5,9 |
| polymer 3 | 202 | 250 | 150 | -1,7 | -0,7 | 0,5 |
| | | | | | | |
| polymer1 | 88 | 250 | 90 | | | |
| polymer3 | 126 | 250 | 90 | | | |
| | | | | | | |
| polymer1 | 200 | 400 | 90 | | | |
| polymer3 | 250 | 400 | 90 | | | |

## Claims

1. A polypropylene composition comprising
a) a first stabilising component consisting of a lactone antioxidant or a mixture of lactone antioxidants
b) a second stabilising component consisting of an antioxidant having a melting point ≥ 200 °C or a mixture of such antioxidants
c) a third stabilising component consisting of a hindered amine light stabiliser or a mixture of such stabilisers.

2. A polypropylene composition, **characterised in that** the antioxidant having a melting point ≥ 200 °C is a phosphite or phosphonite antioxidant.

3. A polypropylene composition according to claim 1 or 2, **characterised in that** it has an MFR of 20 - 3000 g/10 min (230 °C, 2.16 kg).

4. A polypropylene composition according to one of claims 1 to 3, **characterised in that** the lactone antioxidant is selected from one or more
of the group consisting of
5,7-di-tert. butyl-3-(3,4-di-methylphenyl)-3H-benzofuran-2-one,
5,7-di-tert. butyl-3-(2,3-di-methylphenyl)-3H-benzofuran-2-one and
5,7-di-tert. butyl-3-phenyl-3H-benzofuran-2-one.

5. A polypropylene composition according to any one of claims 2 to 4, **characterised in that** the phosphite or phosphonite antioxidant having a melting point ≥ 200 °C is selected from one or more of the group consisting of
Bis(2,6-di-t-butyl-4-methylphenyl) pentaerythrityl-di-phosphite,
Bis(2,4-dicumylphenyl)pentaerythritol diphosphite,
2,2',2"-nitrilo triethyl-tris(3,3',5,5'-tetra-t-butyl-1,1'-biphenyl-2,2'-diyl)phosphite) and
2,2'-Ethylidenebis (4,6-di-t-butylphenyl) fluorophosphonite.

6. A polypropylene composition according to any one of claims 1 to 5, **characterised in that** the hindered amine light stabiliser is selected from one or more of the group consisting of
dimethyl succinate polymer with 4-hydroxy-2,2,6,6-tetramethyl-1-piperidine ethanol,
Poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino)),
Bis-(1,2,2,6,6-pentamethyl-4-piperidyl) sebacate and 1,3,5-Triazine-2,4,6-triamine, N,N'''-(1,2-ethane-diylbis(((4,6-bis(butyl(1,2,2,6,6-pentamethyl-4-piperidinyl)amino)-1,3,5-triazine-2-yl) imino)-3,1-propanediyl))-bis-(N',N"-dibutyl-N',N"-bis-(1,2,2,6,6-pentamethyl-4-piperidinyl).

7. A polypropylene composition according to any one of claims 1 to 6, **characterised in that** it contains a further stabilising component consisting of a phosphite antioxidant having a melting point < 200 °C or a mixture of such phosphite antioxidants.

8. A polypropylene composition according to claim 7, **characterised in that** the amount of phosphite antioxidant having a melting point < 200 °C is no more than 50 wt% of the amount of phosphite antioxidant having a melting point ≥ 200 °C.

9. A polypropylene composition according to one of claims 7 or 8, **characterised in that** the phosphite antioxidant having a melting point < 200 °C is selected from one or more of the group consisting of
Tris (2,4-di-*t*-butylphenyl) phosphate,
Bis (2,4-di-*t*-butylphenyl)-pentaerythrityl-di-phosphite and
Phosphorous acid, cyclic butylethyl propandiol, 2,4,6-tri-t-butylphenyl ester.

10. Polypropylene composition according to any one of claims 1 to 9, **characterised in that** it contains an acid scavenger component and/or a metal deactivator component.

11. Polypropylene composition according to any one of claims 1 to 10, **characterised in that** it contains a further stabilising component consisting of a sterically hindered phenolic antioxidant or mixtures of sterically hindered phenolic antioxidants.

12. Polypropylene composition according to claim 11, **characterised in that** the phenolic antioxidant is selected from one or more of the group consisting of
1,3,5-Tris(3',5'-di-tert. butyl-4'-hydroxybenzyl)-isocyanurate,
2,6-di-tert. butyl -4-methyl phenol,
Pentaerythrityl-tetrakis(3-(3',5'-di-tert. butyl-4-hydroxyphenyl)-propionate,
Octadecyl 3-(3',5'-di-tert. butyl-4-hydroxyphenyl)propionate,
1,3,5-tri-methyl-2,4,6-tris-(3,5-di-tert. butyl-4-hydroxyphenyl) benzene and
Bis-(3,3-bis-(4-'-hydroxy-3'-tert. butylphenyl)butanic acid)-glycolester.

13. A method for producing a fibre or film, **characterised in that** it is obtained by extruding a polypropylene composition according to one of claims 1 to 12 through a die.

14. A polypropylene fibre, **characterised in that** it comprises a polypropylene composition according to one of claims 1 to 12.

15. A polypropylene film, **characterised in that** it comprises a polypropylene composition according to one of claims 1 to 12.

16. A fabric, **characterised in that** it comprises a plurality of fibres according to claim 14.

17. A fabric according to claim 15, **characterised in that** it is non-woven fabric prepared by a spunbond or meltblown process.
